# DEMANDE DE BREVET EUROPEEN

(11) **EP 2 301 791 A1**
(43) Date de publication de la demande: **30.03.2011**
(21) Numéro de dépôt: 09305912.9
(22) Date de dépôt: 29.09.2009
(51) Int. Cl.: B60M 1/34, H02G 5/00

(54) **Ensemble d'alimentation électrique verticale**

(71) Demandeur: Constructions Electriques FELS, S.A., 67400 Illkirch Graffenstaden (FR)
(72) Inventeur: Arnold, Claude, 67100, STRASBOURG (FR); Arnold, Jérôme, 67560, ROSENWILLER (FR)
(74) Mandataire: Nuss, Pierre

(57) **Abrégé**

La présente invention concerne un ensemble d'alimentation électrique verticale.

Ensemble **caractérisé en ce qu**'il est essentiellement constitué par des tronçons modulaires (1) de distribution de courant électrique, par des moyens (2) de liaison électrique desdits tronçons modulaires (1), à compensation de la dilatation, et par des moyens (3) de fixation desdits tronçons modulaires (1) sur une infrastructure (4).

L'invention est plus particulièrement applicable dans le domaine de l'alimentation en courant électrique de mécanismes mobiles verticalement, en particulier les équipements électriques d'ascenseurs ou analogues.

## Description

La présente invention concerne le domaine de l'alimentation en courant électrique de mécanismes mobiles verticalement, en particulier les équipements électriques d'ascenseurs ou analogues et a pour objet un ensemble d'alimentation électrique verticale.

L'alimentation électrique de dispositifs effectuant des déplacements verticaux alternatifs, par l'intermédiaire de câbles de traction enroulés sur des treuils entraînés par des moteurs électriques, notamment dans le domaine des ascenseurs, des monte-charges ou analogues, s'effectue généralement par mise en oeuvre de câbles reliés, d'une part, à une source électrique fixe, généralement en partie supérieure d'une telle installation et, d'autre part, aux dispositifs.

Ces dispositifs d'alimentation électrique existants présentent l'inconvénient, d'une part, d'être d'un poids très élevé croissant proportionnellement avec la hauteur de déplacement des cabines d'ascenseurs ou des monte-charges, d'autre part, de nécessiter des temps d'installation relativement long ce qui entraîne des frais correspondants et, enfin, de nécessiter des interventions régulières de maintenance pour vérifier l'état des câbles électriques, ainsi que de leurs moyens de guidage et de suspension.

La présente invention a pour but de pallier ces inconvénients en proposant un ensemble d'alimentation électrique verticale permettant une distribution d'énergie électrique à des dispositifs déplaçables verticalement de manière très fiable avec un matériel simple d'installation facile et rapide et ne nécessitant pratiquement aucune maintenance.

A cet effet, l'ensemble d'alimentation électrique verticale est essentiellement constitué par des tronçons modulaires de distribution de courant électrique, par des moyens de liaison électrique desdits tronçons modulaires, à compensation de la dilatation, et par des moyens de fixation desdits tronçons modulaires sur une infrastructure.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale d'un ensemble d'alimentation électrique verticale conforme à l'invention ;
les figures 2 et 3 sont des vues partielles en perspective des extrémités d'un tronçon modulaire ;

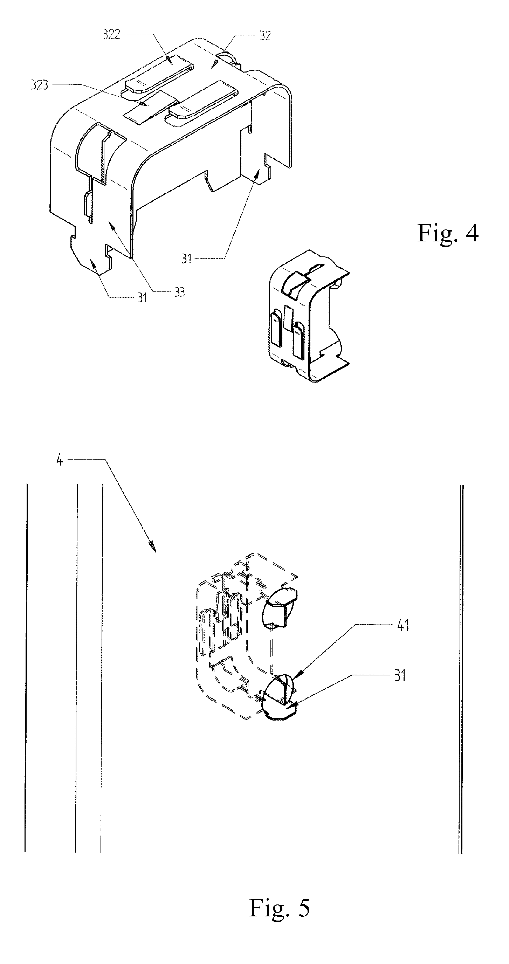

la figure 4 est une vue en perspective d'un moyen de fixation d'un tronçon modulaire sur une infrastructure ;
la figure 5 est une vue en perspective représentant l'ancrage du moyen de fixation dans l'infrastructure ;

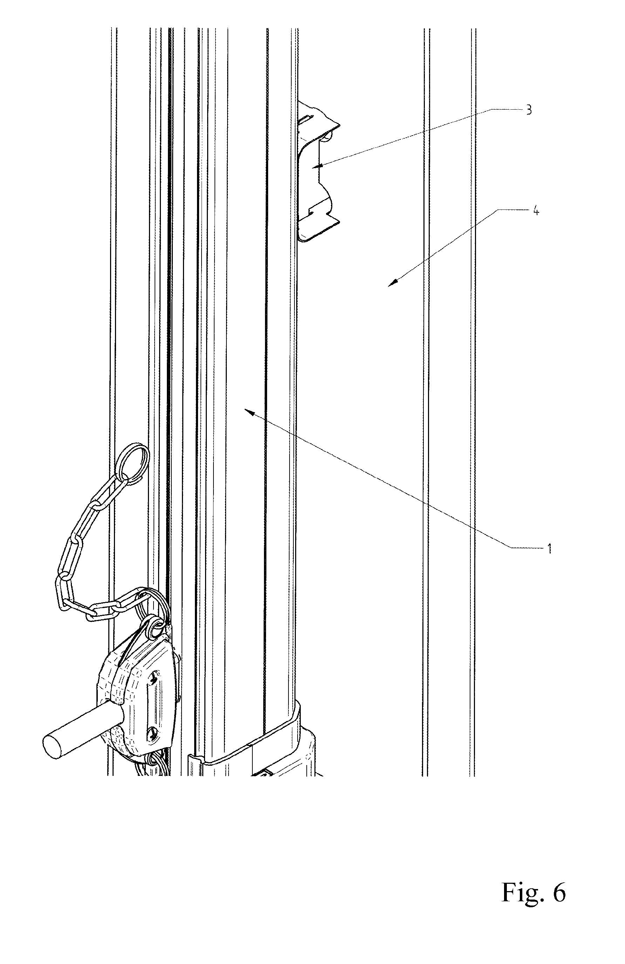

la figure 6 est une vue partielle en perspective représentant le moyen de fixation en position de service entre un tronçon modulaire et l'infrastructure ;
la figure 7 est une vue en perspective à plus grande échelle représentant la connexion d'extrémité entre deux tronçons modulaires ;
la figure 8 est une vue en perspective à plus grande échelle d'un moyen de liaison électrique des tronçons modulaires, à compensation de la dilatation, et
la figure 9 est une vue analogue à celle de la figure 8 représentant le moyen de liaison vu par l'arrière.

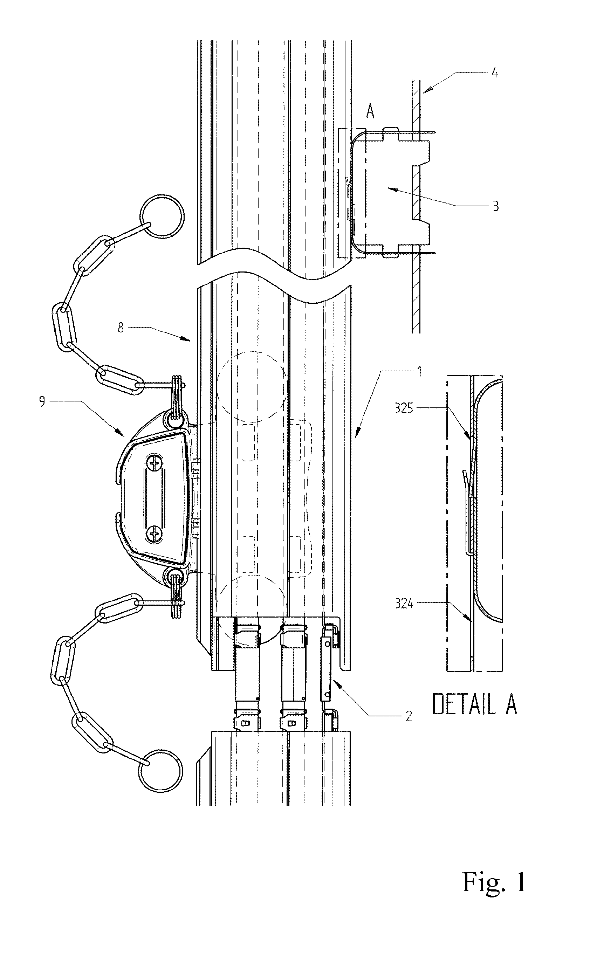

La figure 1 des dessins annexés représente un ensemble d'alimentation électrique verticale, qui est essentiellement constitué, conformément à l'invention, par des tronçons modulaires 1 de distribution de courant électrique, par des moyens 2 de liaison électrique desdits tronçons modulaires 1, à compensation de la dilatation, et par des moyens 3 de fixation desdits tronçons modulaires 1 sur une infrastructure 4.

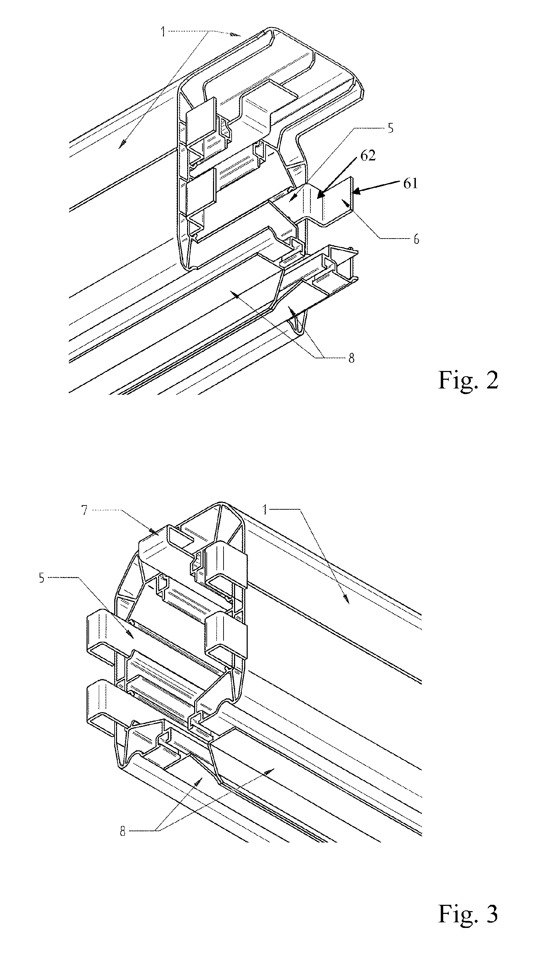

Les tronçons modulaires 1 de distribution de courant électrique (figures 2 et 3) se présentent chacun sous forme d'un rail rigide en matière synthétique, ayant une section en U et dans lequel sont montés des conducteurs électriques 5 pourvus à leurs extrémités de dispositifs 6 et 7 destinés à coopérer avec les moyens 2 de liaison électrique des tronçons modulaires 1 et en saillie auxdites extrémités, l'ouverture du U étant munie d'un dispositif élastique anti-poussières 8. Ainsi, il est possible de déplacer dans un tronçon modulaire 1, ou dans un ensemble de tronçons modulaires 1 reliés entre eux, un chariot collecteur 9 équipé de balais collecteurs, coopérant en conduction électrique avec les conducteurs électriques 5, ainsi que de roulettes de guidage coopérant avec des pistes prévues à cet effet dans le rail, hors de contact avec les conducteurs électriques 5.

Selon une caractéristique de l'invention, au moins une extrémité du rail en matière synthétique à section en U est pourvue, sur au moins une des parois dudit rail, d'un prolongement 1' s'étendant au-delà de la longueur des dispositifs 6 ou 7 en saillie aux extrémités dudit rail. Ainsi, chaque tronçon modulaire 1 peut être disposé transitoirement sensiblement à la verticale en appui contre une paroi, sans risque que les dispositifs 6 et 7 des tronçons modulaires 1, destinés à coopérer avec les moyens 2 de liaison électrique, soient détériorés.

Du fait que les tronçons modulaires 1 avec leurs éléments constitutifs doivent être montés verticalement les uns au-dessus des autres en vue de réaliser un guidage et une alimentation sur une hauteur importante, il se pose un problème de poids d'un ensemble d'alimentation électrique verticale ainsi réalisé, ainsi qu'un problème de dilatation différentielle des différents éléments constitutifs des tronçons modulaires 1.

Ce problème est résolu par la prévision des moyens 2 de liaison électrique des tronçons modulaires 1, à compensation de la dilatation, et des moyens 3 de fixation desdits tronçons modulaires 1 sur l'infrastructure 4.

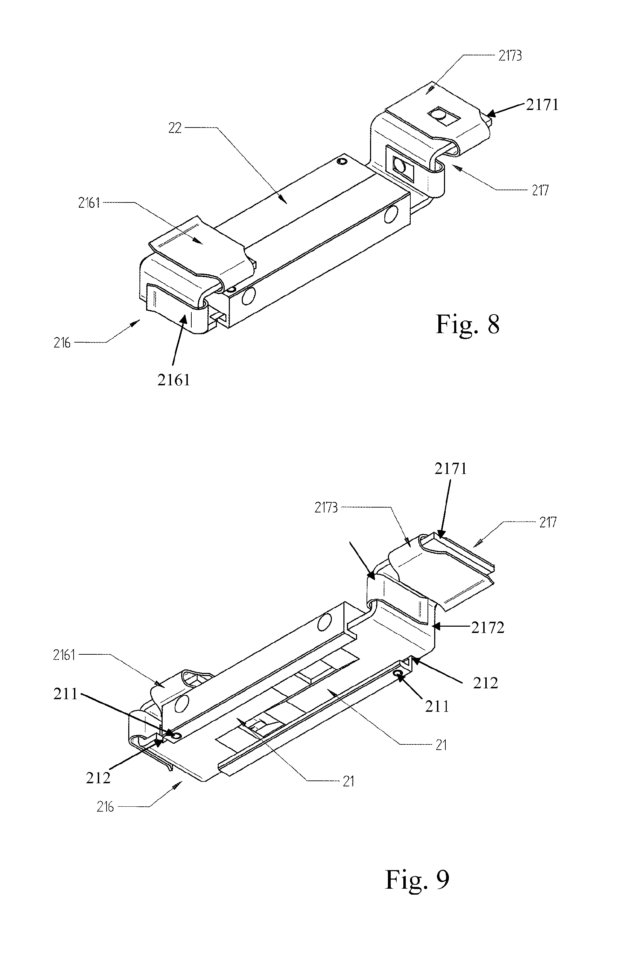

A cet effet, les moyens 2 de liaison électrique des tronçons modulaires 1, à compensation de la dilatation, sont entièrement réalisés en un matériau conducteur électrique et se présentent chacun, comme le montrent les figures 8 et 9 des dessins annexés, sous forme d'une paire de coulisseaux 21, guidés à coulissement par une extrémité dans un boîtier 22 et munis à leur extrémité libre, respectivement, d'un moyen de pincement 216 et 217 destiné à coopérer avec les dispositifs correspondants 6 et 7 prévus aux extrémités des conducteurs électriques 5.

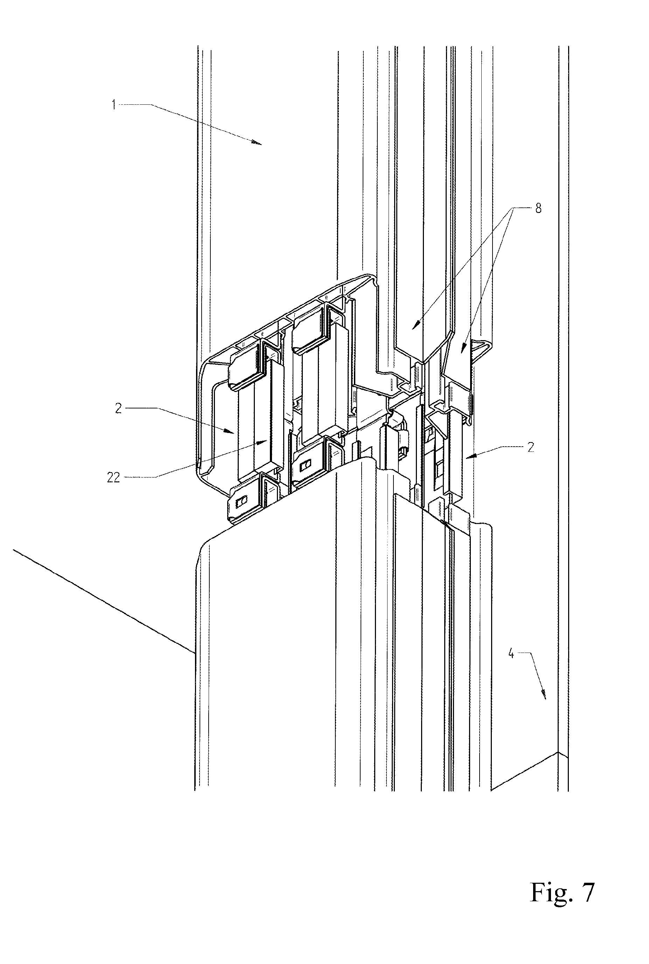

Comme le montrent les figures 7 à 9, l'extrémité libre de l'un des coulisseaux 21 munie du moyen de pincement 216 présente avantageusement une forme de crochet et coopère avec le dispositif correspondant 6 de l'extrémité correspondante d'un conducteur électrique 5, qui présente une forme de Z, dont l'aile libre 61 est recourbée parallèlement au coulisseau 21 et raccordée à ce dernier par une aile de raccordement 62, ladite aile libre 61 et celle de raccordement 62 étant serrées contre les ailes correspondantes du moyen de pincement 216 par l'intermédiaire d'agrafes élastiques 2161 solidaires desdites ailes du moyen de pincement 216 en crochet.

L'extrémité libre de l'autre coulisseau 21, munie du moyen de pincement 217 présente avantageusement une forme de Z, dont l'aile libre 2171 est recourbée parallèlement au coulisseau 21 et raccordée à ce dernier par une aile de raccordement 2172 et coopère avec le dispositif correspondant 7 de l'extrémité correspondante d'un conducteur électrique 5, qui présente une forme de crochet, dont les ailes sont serrées contre l'aile libre 2171 et celle de raccordement 2172 du moyen de pincement 217 par l'intermédiaire d'agrafes élastiques 2173 solidaires desdites ailes du moyen de pincement 217. Ainsi, il est possible de réaliser une continuité parfaite des conducteurs électriques 5 de deux tronçons modulaires 1, c'est-à-dire permettant une continuité de l'application des balais du chariot collecteur 9, et donc une continuité de l'alimentation électrique du ou des dispositifs reliés à ce chariot 9 et se déplaçant avec lui.

Les coulisseaux 21 des moyens 2 de liaison électrique des tronçons modulaires 1, à compensation de la dilatation, sont montés tête-bêche dans le boîtier 22 et maintenus dans ce dernier contre un démontage intempestif, chacun par l'intermédiaire d'une butée 211, solidaire du boîtier 22 et coopérant avec une encoche 212 desdits coulisseaux 21.

Par ailleurs, pour assurer la qualité de la liaison électrique, il est prévu une lame ressort (non représentée) intercalée entre le fond du boîtier 22 et les coulisseaux 21 et s'appliquant contre ces derniers. Il en résulte que cesdits coulisseaux 21 sont parfaitement appliqués contre leur guidage dans le boîtier 22.

Du fait même de la constitution des moyens 2 de liaison électrique des tronçons modulaires, ceux-ci permettent de réaliser une compensation de la dilatation par coulissement des coulisseaux 21 dans le boîtier 22. En cas de variation de température, entraînant une dilatation positive ou négative des conducteurs électriques 5, les moyens 2 de liaison électrique compensent les variations de longueur des conducteurs électriques 5, qui s'ensuivent, par un déplacement correspondant des coulisseaux 21 à l'intérieur du boîtier 22. Bien entendu, les dilatations maximales pouvant survenir entre deux tronçons modulaires peuvent être calculées de manière très précise, de sorte que la longueur des coulisseaux 21 et du boîtier 22 de guidage de ces derniers peut aussi être déterminée de manière très précise pour assurer la continuité électrique en toutes circonstances. Du fait que les moyens de pincement des extrémités 216 et 217 des coulisseaux 21 sont munis d'agrafes élastiques 2161 et 2173, le montage et le démontage des moyens 2 de liaison électrique des tronçons modulaires 1, à compensation de la dilatation, qui relient les extrémités des conducteurs électriques 5 au niveau de la jonction entre lesdits tronçons modulaires 1, peuvent être facilement réalisés.

A cet effet, afin de garantir un montage sûr des moyens 2 de liaison électrique, les agrafes élastiques 2162 et 2173 des coulisseaux 21 peuvent être pourvues d'un cran d'arrêt coopérant avec une ouverture correspondante prévue sur les pattes libres des extrémités 6 et 7 des conducteurs 5.

Les moyens 3 de fixation des tronçons modulaires 1 sur une infrastructure 4 sont préférentiellement montés sur l'infrastructure 4 par l'intermédiaire de pattes 31 élastiquement déformables et coopérant avec des ouvertures 41 prévues dans l'infrastructure 4, ces moyens présentant une surface plane 32 reliée aux pattes 31 par l'intermédiaire de parois verticales latérales 33 portant ladite surface plane à distance de l'infrastructure 4, cette surface plane 32 étant pourvue d'au moins une patte 322 destinée à s'accrocher dans le fond du rail correspondant d'un tronçon modulaire 1, à travers une ouverture de section transversale correspondante 324 prévue dans le fond dudit rail, une patte élastiquement déformable 323, orientée en sens inverse de la patte d'accrochage 322, formant un moyen de blocage élastique en position par coopération de son extrémité libre avec une ouverture correspondante 325 du fond du rail formant le tronçon modulaire 1 (figure 1).

Ainsi, les moyens de fixation 3 d'un tronçon modulaire 1 peuvent être montés sur l'infrastructure 4 par insertion de leurs pattes 31 élastiquement déformables dans les ouvertures 41 de ladite infrastructure 4. La liaison entre ces moyens de fixation 3 et les rails formant les tronçons modulaires 1 est réalisée de la manière décrite ci-dessus, par simple insertion de la ou des pattes 322, de la surface plane 32 des moyens de fixation 3, dans la ou les ouvertures correspondantes prévues dans le fond desdits rails. La prévision de la patte élastiquement déformable 323, orientée en sens inverse de la patte d'accrochage 322, permet de maintenir l'accrochage dans le fond du rail, sans possibilité de vibration, du fait de sa coopération avec l'ouverture 325 du fond du rail.

Chaque tronçon modulaire 1 est avantageusement fixé sur l'infrastructure 4 par l'intermédiaire de deux moyens de fixation 3, dont l'entr'axe de fixation sur le dos des rails des tronçons modulaires 1, par l'intermédiaire des pattes 322 coopérant avec les ouvertures correspondantes 324 prévues dans le fond desdits rails et des pattes 323 élastiquement déformables coopérant avec les ouvertures 325, est inférieur à leur entr'axe de fixation sur l'infrastructure 4, par l'intermédiaire de leurs pattes 31 élastiquement déformables, dans les ouvertures 41 de ladite infrastructure 4. La différence entre l'entr'axe des ouvertures prévues dans le fond des rails des tronçons modulaires 1 et celui des ouvertures 41 de l'infrastructure 4 est au moins légèrement supérieure à la dilatation maximale desdits rails des tronçons modulaires 1 et les pattes 322 des moyens de fixation 3 présentent une longueur supérieure à cette dilatation maximale.

Il en résulte que chaque tronçon modulaire est accroché sur la ou les pattes 322 des moyens de fixation 3 mais repose seulement par l'ouverture correspondante du rail contre la partie de fond de la ou des pattes 322 du moyen 3 supérieur alors que l'accrochage sur la ou les pattes 322 du moyen 3 inférieur sera s'effectue uniquement par contact entre la face verticale de la ou des pattes 322 et la face interne du fond du rail formant le tronçon modulaire 1, à distance de la partie de fond de la ou des pattes 322 du moyen 3 inférieur. Ainsi, en cas de dilatation du rail, ce dernier peut s'allonger ou se rétrécir librement du fait qu'il est suspendu par le moyen de fixation 3 supérieur, le moyen de fixation 3 inférieur assurant uniquement un guidage axial.

Les moyens de fixation 3, tels que décrits ci-dessus, peuvent être rapidement et facilement mis en place sur l'infrastructure 4, par simple clippage de leurs pattes de fixation 31 élastiquement déformables dans les ouvertures 41 de ladite infrastructure 4. Le montage des rails constitutifs de chaque tronçon modulaire 1 s'effectue par simple accrochage de ces derniers au moyen des ouvertures prévues dans leur fond sur la ou les pattes 322 des moyens de fixation 3. Il en résulte que le montage par accrochage permet d'absorber des petits défauts d'alignement, tout en assurant que les tronçons 1 sont parfaitement maintenus après ledit accrochage et que les rails les constituant peuvent se dilater librement.

Par ailleurs, un démontage des rails constitutifs des tronçons modulaires 1 peut être facilement réalisé par déformation élastique des pattes 323 en vue de leur extraction des ouvertures 325 du fond du rail 1, par exemple au moyen d'un outil du type lame de couteau. Bien entendu, le démontage de chaque rail formant un tronçon modulaire 1 peut être effectué par simple décrochage du rail, par coulissement vers le haut, des moyens de fixation 3.

Les extrémités des rails 1, au niveau de leur jonction par l'intermédiaire des moyens 2, sont équipées d'un capot ou couvre-joint, qui les isole électriquement par rapport à l'extérieur. Un tel capot ou couvre-joint est connu en soi et n'est pas représenté aux dessins annexés, pour des raisons de lisibilité de ces derniers.

Grâce à l'invention, il est possible de réaliser un ensemble d'alimentation électrique verticale pour des dispositifs effectuant des déplacements verticaux alternatifs, tels que des ascenseurs et des monte-charges, dans lesquels ladite alimentation électrique est effectuée simplement par une seule pièce mobile, à savoir un chariot collecteur se déplaçant dans un rail ou gaine de distribution et relié mécaniquement par des chaînettes ou analogues, auxdits dispositifs.

Cet ensemble conforme à l'invention présente l'avantage d'être d'une très grande fiabilité et de ne nécessiter pratiquement aucune maintenance, du fait même du nombre extrêmement réduit de pièces mobiles. Par ailleurs, un tel ensemble peut être réalisé par mise en oeuvre de tronçons modulaires de constitution relativement simple, assurant simultanément le guidage du chariot mobile et l'alimentation électrique, la continuité électrique étant assurée par mise en oeuvre de pièces simples et d'une grande fiabilité.

Enfin, du fait de la mise en oeuvre de tronçons modulaires, un tel ensemble peut être installé facilement et rapidement et être adapté à la longueur nécessaire sans travaux complémentaires ou mise en oeuvre de moyens spécifiques. L'installation de l'ensemble peut être faite sans outil et sans nécessiter de réglage particulier.

De plus, du fait même de sa conception, l'ensemble conforme à l'invention est parfaitement adapté à absorber les différences de dilatation entre les différents constituants des tronçons modulaires, à savoir les rails et les conducteurs électriques, de sorte que les problèmes pouvant naître de la superposition d'un grand nombre de tronçons modulaires, tant du point de vue de la dilatation que du poids sont totalement résolus, ce tout en maintenant une qualité maximale du contact électrique.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble d'alimentation électrique verticale **caractérisé en ce qu'**il est essentiellement constitué par des tronçons modulaires (1) de distribution de courant électrique, par des moyens (2) de liaison électrique desdits tronçons modulaires (1), à compensation de la dilatation, et par des moyens (3) de fixation desdits tronçons modulaires (1) sur une infrastructure (4).

2. Ensemble, suivant la revendication 1, **caractérisé en ce que** les tronçons modulaires (1) de distribution de courant électrique se présentent chacun sous forme d'un rail rigide en matière synthétique, ayant une section en U et dans lequel sont montés des conducteurs électriques (5) pourvus à leurs extrémités de dispositifs (6 et 7) destinés à coopérer avec les moyens (2) de raccordement électrique des tronçons modulaires (1) et en saillie auxdites extrémités, l'ouverture du U étant muni d'un dispositif élastique anti-poussières (8).

3. Ensemble, suivant l'une quelconque des revendications 1 et 2, **caractérisé en ce qu'**au moins une extrémité du rail en matière synthétique à section en U est pourvue, sur au moins une des parois dudit rail, d'un prolongement (1') s'étendant au-delà de la longueur des dispositifs (6 ou 7) en saillie aux extrémités dudit rail.

4. Ensemble, suivant l'une quelconque des revendications 1 et 2, **caractérisé en ce que** les moyens (2) de liaison électrique des tronçons modulaires (1), à compensation de la dilatation, sont entièrement réalisés en un matériau conducteur électrique et se présentent chacun, sous forme d'une paire de coulisseaux (21) guidés à coulissement par une extrémité dans un boîtier (22) et munis à leur extrémité libre, respectivement, d'un moyen de pincement (216 et 217) destiné à coopérer avec les dispositifs correspondants (6 et 7) prévus aux extrémités des conducteurs électriques (5).

5. Ensemble, suivant la revendication 4, **caractérisé en ce que** l'extrémité libre de l'un des coulisseaux (21) munie du moyen de pincement (216) présente une forme de crochet et coopère avec le dispositif correspondant (6) de l'extrémité correspondante d'un conducteur électrique (5), qui présente une forme de Z, dont l'aile libre (61) est recourbée parallèlement au coulisseau (21) et raccordée à ce dernier par une aile de raccordement (62), ladite aile libre (61) et celle de raccordement (62) étant serrées contre les ailes correspondantes du moyen de pincement (216) par l'intermédiaire d'agrafes élastiques (2161) solidaires desdites ailes du moyen de pincement (216) en crochet.

6. Ensemble, suivant l'une quelconque des revendications 4 et 5, **caractérisé en ce que** l'extrémité libre de l'autre coulisseau (21), munie du moyen de pincement (217) présente une forme Z, dont l'aile libre (2171) est recourbée parallèlement au coulisseau (21) et raccordée à ce dernier par une aile de raccordement (2172) et coopère avec le dispositif correspondant (7) de l'extrémité correspondante d'un conducteur électrique (5), qui présente une forme de crochet, dont les ailes sont serrées contre l'aile libre (2171) et celle de raccordement (2172) du moyen de pincement (217) par l'intermédiaire d'agrafes élastiques (2173) solidaires desdites ailes du moyen de pincement (217).

7. Ensemble, suivant l'une quelconque des revendications 4 à 6, **caractérisé en ce que** les coulisseaux (21) des moyens (2) de liaison électrique des tronçons modulaires (1), à compensation de la dilatation, sont montés tête-bêche dans le boîtier (22) et maintenus dans ce dernier contre un démontage intempestif, chacun par l'intermédiaire d'une butée (211), solidaire du boîtier (22) et coopérant avec une encoche (212) desdits coulisseaux (21).

8. Ensemble, suivant l'une quelconque des revendications 4 à 7, **caractérisé en ce qu'**une lame ressort est intercalée entre le fond du boîtier (22) et les coulisseaux (21) et s'applique contre ces derniers.

9. Ensemble, suivant l'une quelconque des revendications 4 à 8, **caractérisé en ce que** les agrafes élastiques (2162 et 2173) des coulisseaux (21) sont pourvues d'un cran d'arrêt coopérant avec une ouverture correspondante prévue sur les pattes libres des extrémités (6 et 7) des conducteurs (5).

10. Ensemble, suivant l'une quelconque des revendications 1 et 2, **caractérisé en ce que** les moyens (3) de fixation des tronçons modulaires (1) sur une infrastructure (4) sont montés sur l'infrastructure (4) par l'intermédiaire de pattes (31) élastiquement déformables et coopérant avec des ouvertures (41) prévues dans l'infrastructure (4), ces moyens présentant une surface plane (32) reliée aux pattes (31) par l'intermédiaire de parois verticales latérales (33) portant ladite surface plane à distance de l'infrastructure (4), cette surface plane (32) étant pourvue d'au moins une patte (322) destinée à s'accrocher dans le fond du rail correspondant d'un tronçon modulaire (1), à travers une ouverture de section transversale correspondante (324) prévue dans le fond dudit rail, une patte élastiquement déformable (323), orientée en sens inverse de la patte d'accrochage (322), formant un moyen de blocage élastique en position par coopération de son extrémité libre avec une ouverture correspondante (325) du fond du rail formant le tronçon modulaire (1).

11. Ensemble, suivant l'une quelconque des revendications 1, 2 et 10, **caractérisé en ce que** chaque tronçon modulaire (1) est fixé sur l'infrastructure (4) par l'intermédiaire de deux moyens de fixation (3), dont l'entr'axe de fixation sur le dos des rails des tronçons modulaires (1), par l'intermédiaire des pattes (322) coopérant avec les ouvertures correspondantes (324) prévues dans le fond desdits rails et des pattes (323) élastiquement déformables coopérant avec les ouvertures (325), est inférieur à leur entr'axe de fixation sur l'infrastructure (4), par l'intermédiaire de leurs pattes (31) élastiquement déformables, dans les ouvertures (41) de ladite infrastructure (4).

12. Ensemble, suivant la revendication 11, **caractérisé en ce que** la différence entre l'entr'axe des ouvertures prévues dans le fond des rails des tronçons modulaires (1) et celui des ouvertures (41) de l'infrastructure (4) est au moins légèrement supérieure à la dilatation maximale desdits rails des tronçons modulaires (1) et les pattes (322) des moyens de fixation (3) présentent une longueur supérieure à cette dilatation maximale.
